# EUROPEAN PATENT APPLICATION

(11) **EP 4 793 902 A1**
(43) Date of publication of application: **19.08.2026**
(21) Application number: 26158216.7
(22) Date of filing: 12.02.2026
(51) Int. Cl.: G06V 10/82, G06V 20/56, G06V 20/59, G06V 10/75, G06V 10/74, G06V 10/778

(54) **DRIVING EVENT DETECTION USING ALIGNED VIDEO AND TEXT ENCODERS**

(30) Priority: 13.02.2025 US 202563758085 P
(71) Applicant: Netradyne, Inc., San Diego, CA 92122 (US)
(72) Inventor: PAPADOPOULOS, Athanasios, San Diego, California, 92122 (US); YEDLA, Arvind, San Diego, California, 92122 (US)
(74) Representative: Simmons & Simmons

(57) **Abstract**

A method for detecting a driving event includes receiving video data from one or more vehicle-mounted cameras. The method includes generating one or more video embeddings in an embedding space based on the video data. The method includes generating one or more text embeddings of a natural language input in the embedding space. The natural language input corresponds to a driving event description. The method includes comparing the one or more video embeddings and the one or more text embeddings in the embedding space. The method includes determining at least one similarity value between the one or more video embeddings and the one or more text embeddings based on the comparison. The method includes detecting the driving event when the at least one similarity value is above a detection threshold.

## Description

### CROSS-REFERENCE TO RELATED APPLICATIONS

This application claims priority to U.S. Application No. 63/758,085, filed on February 13, 2025, which is hereby incorporated by reference in its entirety.

### FIELD OF INVENTION

The present disclosure relates to driving monitoring systems, and more particularly to methods and systems for the detection of driving events using aligned video and text encoders that enable real-time classification of driving behaviors through comparison of video embeddings with natural language driving event descriptions in a shared embedding space.

### BACKGROUND

The information disclosed in this background section is only for the enhancement of understanding of the general background of the disclosure and should not be taken as an acknowledgement or any form of suggestion that this information forms the prior art already known to a person skilled in the art.

Driving event detection is a basis for vehicle safety systems that may help drivers improve their awareness of safe and unsafe driving habits. Distracted driving is a concern worldwide, contributing to road accidents, injuries, and fatalities each year. With the increasing use of mobile devices and other in-vehicle technologies, drivers may be prone to distractions that can lead to lapses in attention. Detection systems that rely on manual observation or sensor-based approaches may face challenges in addressing the complexity and variety of distracted behaviors.

Detection systems may rely on pre-trained models that utilize datasets and training processes. Such models may face difficulties adapting to new or uncommon driving behaviors, which may involve retraining and updates. This may limit effectiveness and scalability, making it challenging to keep pace with the evolving nature of driving behaviors.

Another challenge in developing effective driving behavior detection systems is the handling of corner cases, rare or atypical scenarios that may not be well-represented in training data. These corner cases can lead to false positive rates, which may reduce reliability and user trust in the system. Detection systems may lack the agility to address such specific and nuanced scenarios dynamically.

Moreover, existing systems may not incorporate real-time feedback from drivers, which can be useful for refining detection criteria and minimizing false positives. Drivers' experiences and feedback can provide insights into the system's performance under real-world conditions. However, existing systems may not leverage this feedback effectively, resulting in models that do not improve based on user interactions.

Accordingly, systems and methods that can address at least one or more of these challenges in driving event detection are desired.

### SUMMARY

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

According to an aspect of the present disclosure, a method for detecting a driving event is provided. The method includes receiving video data from one or more vehicle-mounted cameras. The method includes generating one or more video embeddings in an embedding space based on the video data. The method further includes generating one or more text embeddings of a natural language input in the embedding space. The natural language input corresponds to a driving event description. The method includes comparing the one or more video embeddings and the one or more text embeddings in the embedding space. Further, the method includes determining at least one similarity value between the one or more video embeddings and the one or more text embeddings based on the comparison. The method further includes detecting the driving event when the at least one similarity value is above a detection threshold.

According to an aspect of the present disclosure, an apparatus for detecting a driving event is provided. The apparatus includes a memory storing instructions. The apparatus includes at least one processor executing the instructions stored in the memory and configured to receive video data from one or more vehicle-mounted cameras. The at least one processor is configured to generate one or more video embeddings in an embedding space based on the video data. The at least one processor is configured to generate one or more text embeddings of a natural language input in the embedding space. The natural language input corresponds to a driving event description. The at least one processor is further configured to compare the one or more video embeddings and the one or more text embeddings in the embedding space. The at least one processor is configured to determine at least one similarity value between the one or more video embeddings and the one or more text embeddings based on the comparison. The at least one processor is configured to detect the driving event when the at least one similarity value is above a detection threshold.

According to an aspect of the present disclosure, a non-transitory computer-readable medium is provided. The non-transitory computer-readable medium includes one or more instructions that, when executed by an apparatus comprising one or more processors, cause the one or more processors to receive video data from one or more vehicle-mounted cameras. The one or more instructions cause the one or more processors to generate one or more video embeddings in an embedding space based on the video data. The one or more instructions cause the one or more processors to generate one or more text embeddings of a natural language input in the embedding space. The natural language input corresponds to a driving event description. The one or more instructions cause the one or more processors to compare the one or more video embeddings and the one or more text embeddings in the embedding space. The one or more instructions cause the one or more processors to determine at least one similarity value between the one or more video embeddings and the one or more text embeddings based on the comparison. The one or more instructions cause the one or more processors to detect the driving event when the at least one similarity value is above a detection threshold.

To further clarify the advantages and features of the present invention, a more particular description of the invention will be rendered by reference to specific embodiments thereof, which are illustrated in the appended drawings. It is appreciated that these drawings depict only typical embodiments of the invention and are therefore not to be considered limiting of its scope. The invention will be described and explained with additional specificity and detail in the accompanying drawings.

### BRIEF DESCRIPTION OF FIGURES

These and other features, aspects, and advantages of the present invention will become better understood when the following detailed description is read with reference to the accompanying drawings in which like characters represent like parts throughout the drawings, wherein:
FIG. 1 illustrates an exemplary vehicle implementing an apparatus for detecting a driving event, according to an embodiment of the present disclosure;
FIG. 2 illustrates a block diagram of the apparatus, according to an embodiment of the present disclosure;
FIG. 3 illustrates a functional block diagram of the apparatus with modules for detecting the driving event, according to an embodiment of the present disclosure;
FIG. 4A illustrates a block diagram of a training system for training a one/zero-shot encoding for driving event detection, according to an embodiment of the present disclosure;
FIG. 4B illustrates a functional block diagram of the apparatus for real-time detection of the driving event, according to an embodiment of the present disclosure;
FIG. 5A illustrates a functional block diagram of the apparatus for detection of the driving event using Natural-language driving event description (PRD) prompts, according to an embodiment of the present disclosure;
FIG. 5B illustrates a functional block diagram of the apparatus for detection of the driving event using corner cases, according to an embodiment of the present disclosure;
FIG. 6 illustrates a functional block diagram of the apparatus for detection of the driving event using user feedback, according to an embodiment of the present disclosure; and
FIG. 7 illustrates a flowchart of a method for detecting the driving event, according to an embodiment of the present disclosure.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having the benefit of the description herein.

### DETAILED DESCRIPTION

For the purpose of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in one embodiment", "in another embodiment", and similar language throughout this specification may, but do not necessarily, all refer to the same embodiment.

The terms "comprise", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. Also, the various embodiments described herein are not necessarily mutually exclusive, as some embodiments can be combined with one or more other embodiments to form new embodiments. The term "or" as used herein, refers to a non-exclusive or unless otherwise indicated. The examples used herein are intended merely to facilitate an understanding of ways in which the embodiments herein can be practiced and to further enable those skilled in the art to practice the embodiments herein. Accordingly, the examples should not be construed as limiting the scope of the embodiments herein.

As is traditional in the field, embodiments may be described and illustrated in terms of blocks that carry out a described function or functions. These blocks, which may be referred to herein as units or modules or the like, are physically implemented by analog or digital circuits such as logic gates, integrated circuits, microprocessors, microcontrollers, memory circuits, passive electronic components, active electronic components, optical components, hardwired circuits, or the like, and may optionally be driven by firmware and software. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the invention. Likewise, the blocks of the embodiments may be physically combined into more complex blocks without departing from the scope of the invention.

The accompanying drawings are used to help easily understand various technical features, and it should be understood that the embodiments presented herein are not limited by the accompanying drawings. As such, the present disclosure should be construed to extend to any alterations, equivalents, and substitutes in addition to those which are particularly set out in the accompanying drawings. Although the terms first, second, etc. may be used herein to describe various elements, these elements should not be limited by these terms. These terms are generally only used to distinguish one element from another.

Certain aspects of the present disclosure relate to an apparatus that uses aligned video and text encoders to detect driving events through comparison of video embeddings with natural language driving event descriptions in a shared embedding space. The apparatus 103 may address challenges associated with detecting distracted driving behaviors by leveraging one/zero-shot encoding approaches that enable real-time detection without extensive retraining.

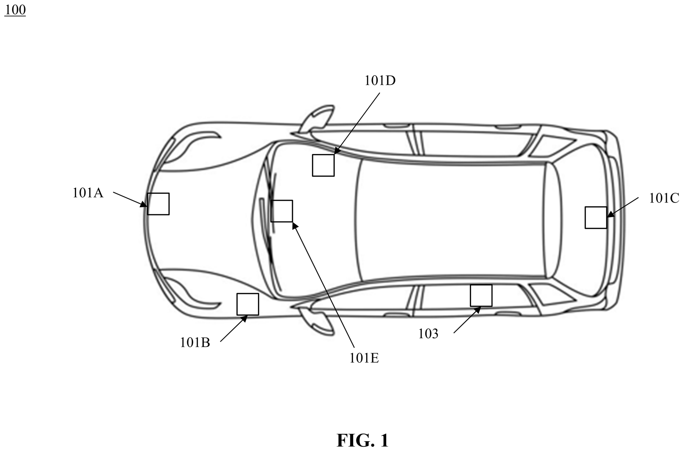

FIG. 1 illustrates an exemplary vehicle 100 implementing an apparatus 103 for detecting a driving event. As shown, the vehicle 100 may include one or more vehicle-mounted cameras 101 configured to capture video data of a driving environment and users within the vehicle 100. The one or more vehicle-mounted cameras 101 may include exterior cameras 101A-101C and one or more interior cameras 101D-101E. The exterior cameras 101A-101C may be positioned on external surfaces of the vehicle 100. The exterior cameras 101A-101C may be configured to capture a view of the driving environment external to the vehicle 100. The exterior cameras 101A-101C may include, but are not limited to, a windshield-mounted exterior-facing camera, a front bumper camera, a grille-mounted camera, a rear-view camera, side-mounted cameras, roof-mounted cameras, and surround-view cameras. In an exemplary embodiment, the interior cameras 101D-101E may be positioned within a cabin of the vehicle 100. The interior cameras 101D-101E may be configured to capture video data of a user, such as a driver, within the vehicle 100. The interior cameras 101D-101E may include, but are not limited to, a driver-facing camera, a cabin-monitoring camera, an Infrared (IR) interior camera, and a gesture-recognition camera.

In an embodiment, the one or more vehicle-mounted cameras 101 may be coupled to an apparatus 103 configured to detect a driving event. In an embodiment, the apparatus 103 may be a part of a control unit of the vehicle 100. In another embodiment, the apparatus 103 may be connected to the control unit. In another embodiment, the apparatus 103 may be integrated together with a windshield mounted camera.

In an embodiment, the driving event refers to a detectable action, behavior, or condition associated with operation of the vehicle 100 or behavior of the driver. In particular, the driving event refers to any identifiable action, behavior, or condition related to how a vehicle is being driven or how the driver is behaving while operating the vehicle. The driving event may be momentary or may occur over a period of time. For example, consider a situation in which the vehicle 100 is in motion and at least one of the interior cameras 101D-101E captures video showing the driver repeatedly raising a hand to the side of the face while holding a rectangular object. The disclosed apparatus 103 processes the video and compares the observed visual patterns with a natural-language description such as "driver using a mobile phone while driving." When the similarity between the captured video data and the description exceeds a defined threshold for a sufficient duration, the apparatus 103 determines that a driving event has occurred. In this case, the detected driving event is distracted driving due to phone usage, and the system may respond by recording the event, generating an alert, or taking other appropriate action.

Accordingly, in an embodiment, the apparatus 103 may receive video data from the one or more vehicle-mounted cameras 101. The apparatus 103 may process the video data using an encoder system comprising aligned video and textual encoders to generate video embeddings in an embedding space. The apparatus 103 may also generate text embeddings of natural language driving event descriptions in the same embedding space. By comparing the video embeddings and the text embeddings, the apparatus 103 may determine similarity values that indicate whether a driving event has occurred.

The apparatus 103 may leverage a foundation model pre-trained on a diverse dataset of textual prompts and corresponding video data. The foundation model may serve as a pre-trained base that understands various notions related to driving, including behaviors of a driver within a vehicle, such as whether the driver is holding a phone, eating, or wearing hands-free devices. By utilizing the foundation model, the apparatus 103 may generate new classifiers based on textual prompts without requiring extensive retraining.

In a further embodiment, the apparatus 103 may employ zero-shot learning to detect previously unseen driving events based on pre-trained knowledge of vehicle-related scenarios. Zero-shot learning may allow the apparatus 103 to describe and understand a video of a driving event without having been explicitly trained on examples of that specific event. The apparatus 103 may leverage pre-trained knowledge and generalize from related concepts learned during training.

In a further embodiment, the apparatus 103 may employ one-shot learning to detect driving events using a single example of a specific driving event. One-shot learning may be useful when obtaining more examples is difficult or costly, such as when driving events are rare. The apparatus 103 may adapt to new information from a single example to detect other examples that are similar.

The apparatus 103 may dynamically generate and compare encoded vectors from textual prompts and live video clips, enabling real-time detection of new distracted behaviors without extensive retraining. For instance, if a regulatory change requires detection of hands-free device usage, the apparatus 103 may immediately adapt by generating a prompt such as "Is the driver wearing a hands-free device?" and encoding the prompt into a vector using a text encoder. The apparatus 103 may then compare the encoded prompt with encoded video clips of the driver to detect the specified behavior in real-time.

The apparatus 103 may also track behaviors over time. For instance, if the apparatus 103 detects that a driver is eating, the apparatus 103 may continuously monitor this behavior. If the detected behavior exceeds a predefined threshold, the apparatus 103 may trigger an alert indicating a confirmed detection. Continuous tracking may help ensure that transient or brief actions are not misclassified.

In another embodiment, the apparatus 103 may support audio encoding to enhance detection of behaviors that involve sound, such as singing or laughing. By incorporating audio data, the apparatus 103 may generate prompts like "Is the driver singing?" and compare audio clips against encoded vectors for singing. A multi-modal approach may enable improved detection of various distracted or drowsy behaviors by better distinguishing other behaviors, like singing, which may have a similar visual appearance to other behaviors.

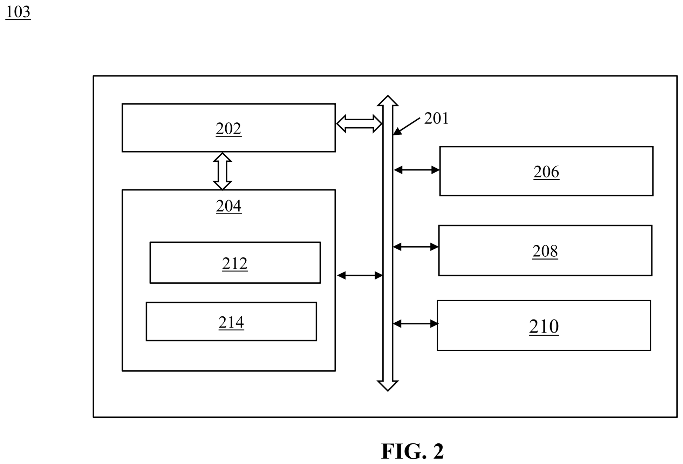

The apparatus 103 has been further explained in reference to FIG. 2.

FIG. 2 illustrates a block diagram of the apparatus 103 for detecting the driving event, according to an embodiment of the present disclosure. The apparatus 103 may be installed within the vehicle 100 or may be a part of the vehicle 100. The apparatus 103 may be communicatively coupled to the one or more vehicle-mounted cameras 101.

As shown, the apparatus 103 may include a bus 201, at least one processor 202, a memory 204, a communication unit 206, an Input/Output (I/O) interface 208, an output unit 210, a database 212, and modules 214.

The at least one processor 202 may be implemented as one or more microprocessors, microcomputers, microcontrollers, digital signal processors, central at least one processors, state machines, logic circuitries, or any devices that manipulate signals based on operational instructions. Among other capabilities, the at least one processor of the at least one processor 202 may be configured to fetch and execute computer-readable instructions and data stored in the memory 204. The compute capability of the apparatus 103 may be a Central processing Unit (CPU) or an integrated System-on-a-chip (SOC), which may include a CPU and other specialized compute cores, such as a Graphics Processor (GPU) and a gesture recognition processor.

With continued reference to FIG. 2, the memory 204 may include one or more computer-readable storage media that can communicate via the bus 201. The memory 204 may include non-volatile storage elements. Examples of such non-volatile storage elements may include magnetic hard discs, optical discs, floppy discs, flash memories, or forms of Electrically Programmable Memories (EPROM) or Electrically Erasable And Programmable Memories (EEPROM). The memory 204 may be considered a non-transitory storage medium. The term "non-transitory" may indicate that the storage medium is not embodied in a carrier wave or a propagated signal. However, the term "non-transitory" may not be interpreted to mean that the memory 204 is non-movable. In some cases, a non-transitory storage medium may store data that can, over time, change (e.g., in Random Access Memory (RAM) or cache). The memory 204 may further include any non-transitory computer-readable medium including, for example, volatile memory, such as Static Random-Access Memory (SRAM) and Dynamic Random-Access Memory (DRAM), or non-volatile memory, such as Read-Only Memory (ROM), erasable programmable ROM, flash memories, hard disks, optical disks, and magnetic tapes. The memory 204 stores instructions that, when executed by the at least one processor 202, cause the at least one processor 202 to perform operations associated with driving event detection.

The memory 204 includes the database 212 and the modules 214. The database 212 may be configured to be accessed by the at least one processor 202 and may store information as used by the at least one processor 202 to perform one or more functions. The database 212 may store video data, text embeddings, detection criteria, and other information associated with driving event detection. The modules 214 include routines, programs, objects, components, data structures, and other elements that perform particular tasks or implement data types. The modules 214 may also be implemented as signal processors, state machines, logic circuitries, or any other device or component that manipulates signals based on operational instructions. The modules 214 may be implemented in hardware, instructions executed by the at least one processor 202, or by a combination thereof.

As further shown in FIG. 2, the communication unit 206 may be configured to communicate video data or any other content over a communication network via a communication port or interface or using the bus 201. The communication unit 206 may include a communication port or a communication interface for sending and receiving data via the communication network. The apparatus 103 may include wireless communication to cloud services, such as with Long Term Evolution (LTE) or Bluetooth communication to other devices nearby. The communication unit 206 may include a Wireless-Fidelity (Wi-Fi) module or Bluetooth module for enabling wireless communication capability and data exchange capability between various modules of the apparatus 103. The communication unit 206 may enable the apparatus 103 to communicate with external systems, such as cloud servers, for transmitting video data and receiving updated detection parameters.

The I/O interface 208 may refer to hardware or software components that enable communication between various modules of the apparatus 103. The I/O interface 208 may serve as a communication medium for exchanging information, commands, signals, or query responses with other devices or systems. The I/O interface 208 may be a part of the at least one processor 202 or may be a separate component. The I/O interface 208 may be created in software or may be a physical connection in hardware. The I/O interface 208 may be configured to connect with an external network, external media, a display, or any other components, or combinations thereof.

The output unit 210 may comprise a display device. The display device may be an Augmented Reality/Virtual Reality (AR/VR) device to display a virtual environment to a user. The display device may include a display screen. As a non-limiting example, the display screen may be Light Emitting Diode (LED), Liquid Crystal Display (LCD), Organic Light Emitting Diode (OLED), Active Matrix Organic Light Emitting Diode (AMOLED), or Super Active Matrix Organic Light Emitting Diode (SAMOLED) screen. The output unit 210 may be configured to present alerts or notifications related to detected driving events.

The apparatus 103 may also include a Global Positioning System (GPS) either as a separate module or integrated within a system-on-a-chip. The components of the apparatus 103 may be interconnected via the bus 201, which may facilitate communication and data transfer between the various components. The at least one processor 202 may communicate bidirectionally with the memory 204 via the bus 201. The bus 201 may also provide bidirectional communication pathways between the at least one processor 202 and the communication unit 206, the I/O interface 208, and the output unit 210.

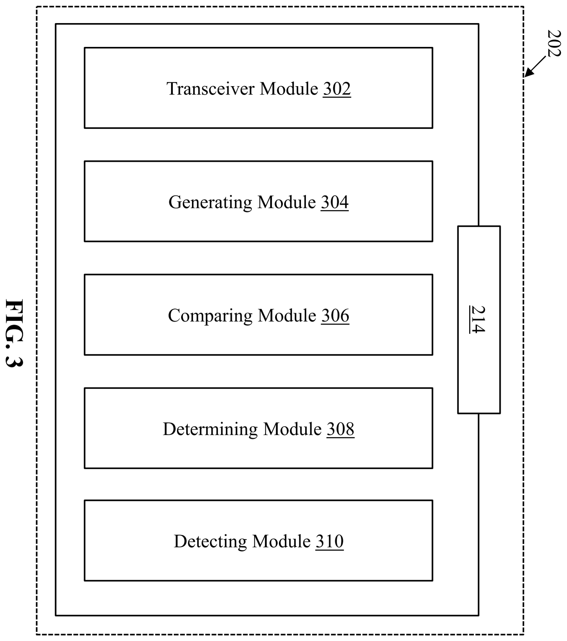

In an embodiment, the present disclosure also contemplates a computer-program product, having machine-readable instructions stored therein, when executed by the at least one processor 202, which causes the at least one processor 202 to perform the method for detecting the driving event using the video data captured by the one or more vehicle-mounted cameras 101. The details on the method(s) performed by the at least one processor 202 are elaborated in subsequent paragraphs at least with reference to FIG. 3.

Further, the present disclosure also contemplates a non-transitory computer-readable medium encoded with executable instructions. The executable instructions, when executed by the at least one processor 202, cause the at least one processor 202 to perform the method for detecting the driving event using the video data captured by the one or more vehicle-mounted cameras 101. The details on the method(s) performed by the at least one processor 202 are elaborated in subsequent paragraphs at least with reference to FIG. 3.

FIG. 3 illustrates a functional block diagram of the apparatus 103 with the modules 214 for detecting the driving event, according to an embodiment of the present disclosure. The apparatus 103 includes the modules 214 i.e., a transceiver module 302, a generating module 304, a comparing module 306, a determining module 308, and a detecting module 310. Each module represents a logical or physical component implemented by the at least one processor 202 executing instructions or operating through dedicated hardware circuitry. The modules 214 communicate with each other through data buses or shared memory within the apparatus architecture.

The transceiver module 302 may be configured to receive the video data from the one or more vehicle-mounted cameras 101. In an exemplary embodiment, the transceiver module 302 may receive the video data from the exterior cameras 101A-101C capturing a view of the driving environment external to the vehicle 100. The transceiver module 302 may receive the video data from the interior cameras 101D-101E capturing video data of the driver within the vehicle 100. In an exemplary embodiment, the video data may comprise a sequence of frames captured while the vehicle 100 is in motion. The transceiver module 302 may receive the video data through the I/O interface 208 or through direct connection to the one or more vehicle-mounted cameras 101. The transceiver module 302 may store the video data in the database 212 for processing by other modules of the modules 214.

Then the generating module 304 may be configured to generate one or more video embeddings in an embedding space based on the video data received by the transceiver module 302. The generating module 304 may process frames or clips from the video data to generate the one or more video embeddings. In an embodiment, the one or more video embeddings may represent visual content of the video data in the embedding space. The generating module 304 may capture semantic information about objects, actions, and behaviors depicted in the video data. In an embodiment, the generating module 304 may utilize an encoder system comprising aligned one or more video encoders and one or more textual encoders to generate the one or more video embeddings. The encoder system may comprise a foundation model pre-trained on a dataset of textual prompts and corresponding video data. The foundation model may serve as a pre-trained base that understands various notions related to driving, including behavior of a driver within the vehicle 100, such as whether the driver is holding a phone, eating, or wearing hands-free devices.

The generating module 304 may further be configured to generate one or more text embeddings of a natural language input in the embedding space. The natural language input may correspond to a driving event description. In an embodiment, the driving event description may specify what driving behavior or event should be detected.

In an embodiment, the driving event description may comprise hierarchical event detection parameters. The hierarchical event detection parameters may organize detection criteria in a structured manner that captures relationships between general event categories and specific variations. Each version of driving event description may be maintained in a hierarchical structure that captures the relationships between general event categories and specific variations. The hierarchical structure may enable independent performance metrics to be tracked for each hierarchical level, allowing targeted optimization of detection criteria at different granularities. The hierarchical event detection parameters may include, but are not limited to, a primary event description, common false alarm scenarios, and corner case specifications. The primary event description may define a general category of the driving event to be detected, such as "distracted driving" or "drowsy driving." The primary event description may serve as a top-level classification that encompasses multiple specific variations of the driving event. The common false alarm scenarios may specify situations that are frequently misidentified as the driving event but that should not trigger detection. For example, the common false alarm scenarios for a "phone usage" detection may include "drinking water," "scratching face," or "adjusting sunglasses.' The corner case specifications may define rare or exceptional conditions that require special handling to ensure accurate detection. The corner case specifications may address subtle behaviors or unusual circumstances that standard detection criteria may not adequately capture.

The hierarchical structure of the driving event description may enable the apparatus 103 to apply detection criteria at multiple levels of specificity. At a first hierarchical level, the apparatus 103 may evaluate whether video data matches the primary event description corresponding to a general event category. At a second hierarchical level, the apparatus 103 may evaluate whether the video data matches any common false alarm scenarios that should suppress detection. At a third hierarchical level, the apparatus 103 may evaluate whether the video data matches any corner case specifications that require special handling. By organizing detection criteria hierarchically, the apparatus 103 may efficiently process the video data and may apply appropriate detection logic based on the characteristics of the observed behavior.

In an embodiment, independent performance metrics may be tracked for each hierarchical level of the driving event description. The performance metrics for the primary event description may indicate how accurately the apparatus 103 identifies general event categories. The performance metrics for common false alarm scenarios may indicate how effectively the apparatus 103 suppresses false positive detections. The performance metrics for corner case specifications may indicate how accurately the apparatus 103 handles rare or exceptional conditions. By tracking independent performance metrics for each hierarchical level, the apparatus 103 may identify specific areas of the hierarchical structure that require refinement and focuses optimization efforts on those areas.

In a further embodiment, the driving event description may comprise a specification of driving event criteria. The specification of driving event criteria may define parameters and conditions that govern how driving events are detected. The specification may include quantitative thresholds, temporal requirements, spatial constraints, and behavioral indicators that characterize a driving event. For example, the specification of driving event criteria for detecting phone usage may include parameters such as "hand position relative to face," "duration of hand position," "presence of rectangular object," and "driver gaze direction."

In another embodiment, the driving event description may comprise at least one of a condition for triggering the driving event detection, a condition for suppressing a false positive detection, and a condition for escalating detection to additional review. The condition for triggering the driving event detection specifies circumstances under which a driving event detection should be initiated. For example, a trigger condition may specify "hand near face for more than five seconds while holding an object." The condition for suppressing a false positive detection specifies scenarios that should be ignored to prevent incorrect detections. For example, a suppressor condition may specify "exclude detections when driver is drinking from a container" or "exclude detections when driver is adjusting eyewear." The condition for escalating detection to additional review specifies circumstances under which a detection should be forwarded for further analysis, such as human review or more computationally intensive processing. For example, an escalation condition may specify "escalate to cloud processing when confidence score is between 0.4 and 0.7."

Then, the generating module 304 may process the driving event description to generate the one or more text embeddings. The one or more text embeddings may represent an encoded representation of the driving event description in the same embedding space as the one or more video embeddings generated by the generating module 304. This alignment between video and text representations enables meaningful comparison between visual content captured by the one or more vehicle-mounted cameras 101 and textual descriptions of the driving event.

For example, the video data and the natural language input are each converted into numerical vectors using trained encoders. These vectors are placed into the same embedding space. For example, a video showing a driver holding a phone near the ear is encoded into the one or more video embeddings, and the natural language input "driver using a mobile phone while driving" is encoded into the one or more text embeddings. As both the video and text embeddings represent similar meaning, these embeddings may be located close to each other in the embedding space. The system can then measure the distance or similarity between these embeddings to determine whether the video corresponds to the described driving event.

As a practical example, imagine the embedding space as a map where related behaviors cluster together. Videos and text related to "phone usage" form one cluster, while those related to "drinking water" or "adjusting eyewear" form separate clusters nearby but distinct. When new video data is captured, its embedding is placed on this map. If it appears close to the "phone usage" cluster and far from other clusters, the system concludes that a phone-usage driving event has likely occurred. In this way, the embedding space enables flexible, efficient comparison between different data types and supports detection of known, new, or even previously unseen driving events without retraining the entire system. By utilizing the foundation model, the generating module 304 may generate the one or more video embeddings that can be compared with text embeddings within the shared embedding space. By utilizing the foundation model, the apparatus 103 may generate new classifiers based on textual prompts without requiring extensive retraining.

In an embodiment, the generating module 304 may be configured to receive a natural-language driving event description (which may be referred to as a Product Requirements Document or PRD to reflect that it may be derived from or may be a PRD) specifying detection criteria. The detection criteria may include, but is not limited to, a trigger condition, one or more suppressor conditions configured for reducing false positives, and an escalation condition. The trigger condition may specify circumstances under which a driving event detection should be initiated. The one or more suppressor conditions may specify scenarios that should be ignored to prevent false positive detections. The escalation condition may specify circumstances under which detection should be escalated to additional review. In an embodiment, the generating module 304 may receive the natural-language driving event description via a requirements-specification interface. Accordingly, the generating module 304 may generate the one or more text embeddings based on the natural-language driving event description. For example, the generating module 304 may generate the one or more text embeddings using only on the natural-language driving event description. In another example, the generating module 304 may generate the one or more text embeddings using the natural language input and the natural-language driving event description. In an embodiment, the natural-language driving event description may specify one or more discriminators distinguishing visually similar one or more actions. For instance, the natural-language driving event description may include discriminators that distinguish between a driver holding a smartphone and a driver drinking water, which may have similar visual appearances when a hand is near the face. In another embodiment, the natural-language driving event description may include chat-prompt-generated corner-case queries targeting rare or subtle behaviors. The chat-prompt-generated corner-case queries may be generated by language models that analyze patterns in detection errors and generate targeted queries to address specific corner case scenarios. For instance, if the apparatus 103 frequently confuses a driver scratching their beard with a driver holding a phone, a language model may generate a corner-case query such as "Is the driver scratching their face without holding an object?" to distinguish between these visually similar actions.

In a further embodiment, the comparing module 306 may be configured to compare the one or more video embeddings and the one or more text embeddings in the embedding space. The comparing module 306 may receive the one or more video embeddings and the one or more text embeddings from the generating module 304. The comparing module 306 may then compute a difference or distance between the one or more video embeddings and the one or more text embeddings in the embedding space. In an exemplary embodiment, the comparing module 306 may utilize cosine similarity, Euclidean distance, or other distance metrics suitable for comparing embeddings in high-dimensional spaces. The comparing module 306 may also process multiple video embeddings corresponding to different frames or clips of the video data against the one or more text embeddings corresponding to the driving event description.

In an embodiment, the generation module 304 may generate an audio embedding associated with the video data in the embedding space. Then, the comparing module 306 may compare the audio embedding with the one or more text embeddings corresponding to audio-involved behaviors.

Then, the determining module 308 may be configured to determine at least one similarity value between the one or more video embeddings and the one or more text embeddings based on the comparison. The at least one similarity value may quantify how closely the video content represented by the one or more video embeddings matches the driving event description represented by the one or more text embeddings. Higher similarity values may indicate that the video content more closely matches the driving event description, while lower similarity values may indicate less correspondence between the video content and the driving event description. Accordingly, the at least one similarity value may provide a numerical measure that can be compared against a detection threshold to determine whether a driving event has occurred.

Then, the detection module 310 may be configured to detect the driving event when the at least one similarity value is above a detection threshold. In an embodiment, the detection threshold is a predetermined value that determines when a similarity value is sufficient to indicate that the driving event has occurred. When the at least one similarity value exceeds the detection threshold, the detection module 310 generates a driving event detection, indicating that the driving event described by the driving event description has been detected in the video data. The detection threshold may be configured based on the desired balance between detection sensitivity and false positive rate, with lower thresholds increasing sensitivity but potentially increasing false positives, and higher thresholds reducing false positives but potentially missing some actual driving events.

In an embodiment, the detection module 310 may detect the driving event using a zero-shot learning process. The zero-shot learning process may be configured to detect a previously unseen driving event based on pre-trained knowledge of vehicle-related scenarios. The zero-shot learning allows the apparatus 103 to describe and understand a video of a driving event without having been explicitly trained on examples of that specific event. Instead, the apparatus 103 leverages pre-trained knowledge and generalizes from what the apparatus 103 has learned about various related concepts during training on a diverse dataset. For instance, a foundation model with video-to-text capabilities that has been trained on a wide range of driving scenarios and general language descriptions may be able to describe a new, previously unseen driving event accurately. The foundation model may base such descriptions on an understanding of driving rules, objects, and actions learned from training datasets. When a new driving event occurs that was not part of the training data, the zero-shot learning process enables the apparatus 103 to recognize and classify the new driving event by comparing video embeddings of the new driving event with text embeddings of natural language descriptions that characterize the new driving event.

Further, the zero-shot learning may be useful when obtaining training examples for every possible scenario is impractical or when the variety of driving events that would be described similarly is large. In such cases, the apparatus 103 may use a driving event description that describes common features of the driving event but does not include salient but unnecessary details of specific examples. The zero-shot learning process enables the apparatus 103 to adapt to new tasks by generating appropriate textual prompts and comparing the textual prompts with encoded video data, without requiring extensive retraining.

In a further embodiment, the detection module 310 may detect the driving event using a one-shot learning process. The one-shot learning process uses a single scenario of a specific driving event to detect similar driving events. The one-shot learning refers to the ability of the apparatus 103 to learn and recognize a new concept or event with a single example. The apparatus 103 may process a single video of a specific traffic event and generate a text encoding of that event. The text encoding may then be stored and used directly as an embedding rather than as natural language text. The stored text encoding may be used as a driving event description to find other live videos that match the same language description of the event. The apparatus 103 may adapt to new information from the single example to detect other examples that are similar. One-shot learning may be useful when it is possible to provide at least one example, but obtaining more examples is difficult or costly, perhaps because such events are rare.

In a further embodiment, the detection module 310 may be further configured to generate an alert in response to detecting the driving event. The detection module 310 presents the alert through the output unit 210 to notify the driver of the detected driving event. The alert may comprise visual notifications displayed on the display screen, auditory notifications such as sounds or voice messages, or haptic notifications such as vibrations. The alert informs the driver of the detected behavior, enabling the driver to take corrective action if the detected behavior represents unsafe driving.

In an embodiment, the detection module 310 may be configured to receive a safety priority designation associated with the driving event and adjust the detection threshold based on the safety priority designation. The safety priority designation may indicate a level of safety criticality assigned to a particular type of driving event. Different driving events may be associated with different levels of safety criticality based on the potential risk or harm associated with the driving event. For example, a driving event involving a driver looking away from the road for an extended period may be assigned a higher safety priority designation than a driving event involving a driver briefly adjusting vehicle controls. The safety priority designation may be received from a configuration interface, a cloud platform, or a database that stores safety priority designations for different types of driving events.

The detection module 310 may then be configured to adjust the detection threshold based on the safety priority designation. For example, when a driving event is associated with a higher safety priority designation, the detection module 310 adjusts the detection threshold to increase sensitivity of detection for that driving event. For example, if a driving event is designated as safety-critical, the detection threshold is lowered so that the driving event is detected even when the similarity value between video embeddings and text embeddings is relatively lower. Conversely, when a driving event is associated with a lower safety priority designation, the detection module 310 adjusts the detection threshold to reduce sensitivity of detection, which helps reduce false positive detections for less safety-critical events. The adaptive thresholding based on safety priority designations ensures that safety-critical driving events are detected with higher sensitivity while reducing false positive detections for less critical events.

The adaptive thresholding applies more stringent verification requirements to modifications affecting safety-critical detection scenarios. When a proposed modification to a driving event description affects detection of a safety-critical driving event, the verification process requires higher confidence levels, additional testing against labeled video data, or human expert review before the modification is implemented. For example, if a proposed modification affects detection of drowsy driving, which may be designated as a safety-critical driving event, the verification process may require that the modification demonstrate improved accuracy on a larger set of test cases and may require approval from a human reviewer before deployment.

The adaptive thresholding based on safety criticality levels ensures that modifications to detection criteria for safety-critical driving events undergo more rigorous validation than modifications to detection criteria for less safety-critical driving events. The more stringent verification requirements help prevent modifications that could inadvertently reduce detection accuracy for safety-critical driving events. By applying different verification requirements based on safety criticality levels, the detection module 310 balances the need for continuous improvement of detection criteria with the need to maintain reliable detection of safety-critical driving events.

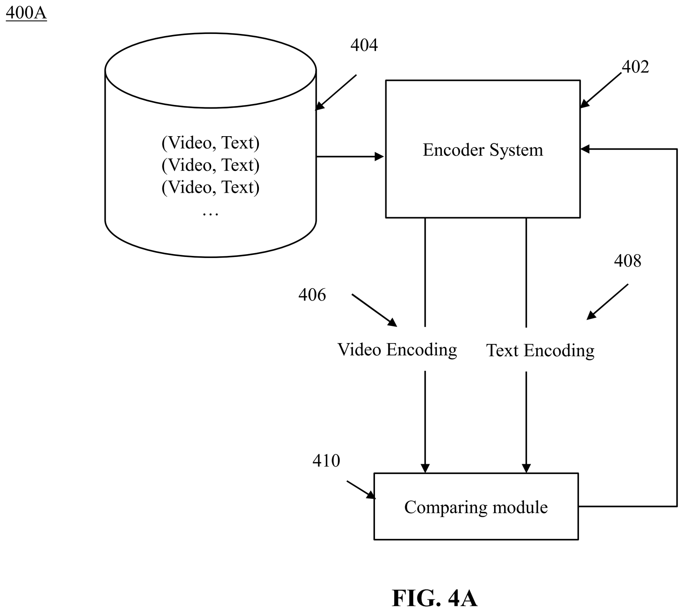

FIG. 4A illustrates a block diagram of a training system 400A for training a one/zero-shot encoding for driving event detection, according to an embodiment of the present disclosure. As shown, the training system 400A includes the encoder system 402, a database 404, and a comparing module 410. The database 404 stores video data paired with textual prompts. The prompts stored in the database 404 may be valid descriptions of driving events depicted in the corresponding videos. The database 404 provides the video data and the textual prompts to the encoder system 402 for processing during training.

The encoder system 402 may comprise aligned video and textual encoders that process input data from the database 404. The encoder system 402 may include one or more video encoders and one or more textual encoders that are aligned to operate within a shared embedding space. The encoder system 402 may process video data from the database 404 to generate the video encoding 406 (also referred to as video embeddings). The video encoding 406 may represent an encoded representation of the video data in the embedding space. The encoder system 402 processes textual prompts from the database 404 to generate the text encoding 408 (also referred to as text embeddings). The text encoding 408 represents an encoded representation of the textual description in an aligned embedding space.

As further shown in FIG. 4A, the comparing module 410 receives both the video encoding 406 and the text encoding 408 from the encoder system 402. The comparing module 410 then computes a difference between the video encoding 406 and the text encoding 408. The output of the comparing module 410 may be used as an error signal in a machine learning framework to update the encoder system 402. Through iterative training using the error signal, the encoder system 402 learns to align video and text representations in the shared embedding space for driving event detection. The generating module 304 utilizes the trained encoder system 402 to generate the one or more video embeddings from the video data received from the one or more vehicle-mounted cameras 101. The generating module 304 utilizes the trained encoder system 402 to generate the one or more text embeddings from the driving event description.

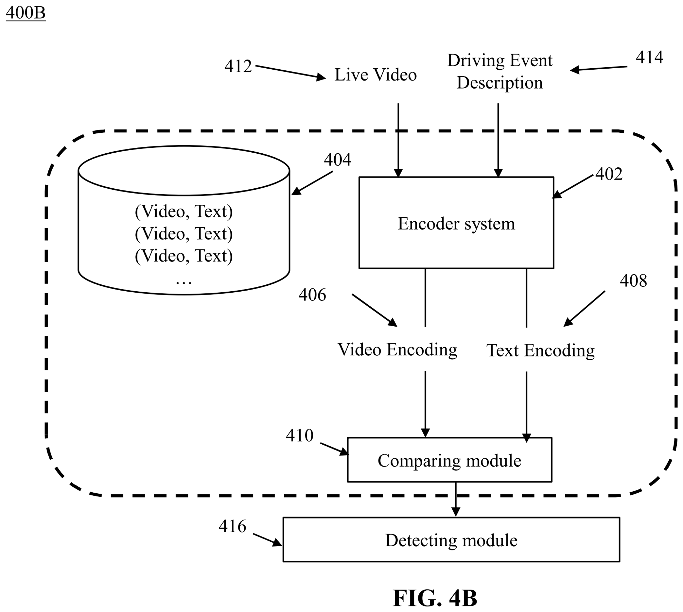

FIG. 4B illustrates a functional block diagram 400B of the apparatus 103 for real-time detection of a driving event, according to an embodiment of the present disclosure. The apparatus 103 includes the encoder system 402, the database 404, the comparing module 410, and a detecting module 416.

As shown, the encoder system 402 may receive input from multiple sources. For example, the encoder system 402 may receive live video 412 from any one of the one or more vehicle-mounted cameras 101. The live video 412 may provide real-time video data captured from the one or more vehicle-mounted cameras 101 having a view of the driving environment, such as from the exterior cameras 101A-101C or the interior cameras 101D-101E. The encoder system 402 may also receive the driving event description 414 from the user. The driving event description 414 may provide a textual description of one or more driving events to be detected. The database 404 may store pairs of video and text data, which may be used for training or reference purposes by the encoder system 402.

The encoder system 402 processes the live video 412 to generate the video encoding 406, which represents the video data in the embedding space. Simultaneously, the encoder system 402 processes the driving event description 414 to generate the text encoding 408, which represents the textual description in an aligned embedding space. The encoder system 402 comprises aligned video and textual encoders that enable comparison between video content and textual descriptions within a shared embedding space.

The comparing module 410 receives both the video encoding 406 and the text encoding 408 from the encoder system 402. Based on the output of the comparing module 410, the apparatus 103 determines the at least one similarity value between the video encoding 406 and the text encoding 408. The driving event detection 416 determines whether a driving event has occurred based on the comparison results. When the comparing module 410 indicates that the at least one similarity value exceeds the detection threshold, the detecting module 416 generates the driving event detection, indicating that the driving event described by the driving event description 414 has been detected in the live video 412.

Further, the apparatus 103 may track behaviors over time. For instance, if the apparatus 103 detects that a driver is eating, the apparatus 103 may continuously monitor this behavior. If the detected behavior exceeds the detection threshold, the apparatus 103 may trigger the alert indicating a confirmed detection. Continuous tracking may help ensure that transient or brief actions are not misclassified, thereby improving the utility of the apparatus 103.

In a further embodiment, the encoder system 402 may generate the audio embedding associated with the video data in the embedding space. Accordingly, the comparing module 410 may compare the audio embedding with the one or more text embeddings corresponding to audio-involved behaviors. The encoder system 402 may support audio encoding in addition to video encoding. The audio encoding capability enables detection of behaviors that involve sound, such as singing or laughing. The encoder system 402 may generate audio embeddings from audio data captured by one or more microphones associated with the one or more vehicle-mounted cameras 101 or other audio capture devices within the vehicle 100. The audio embeddings may be generated in the same embedding space as the video embeddings and the text embeddings, enabling comparison across different modalities.

When audio data is captured along with video data, the encoder system 402 may process the audio data to generate the audio embedding that represents the audio content in the shared embedding space. The encoder system 402 may then compare the audio embedding with text embeddings corresponding to audio-involved behaviors. For instance, the encoder system 402 may generate a text embedding from a prompt such as "Is the driver singing?" or "Is the driver laughing?". Accordingly, the comparing module 410 may compare the audio embedding against the text embedding to detect whether the driver is engaged in the specified audio-involved behavior.

The above-discussed multi-modal approach enables improved detection of various distracted or drowsy behaviors by better distinguishing behaviors that have similar visual appearances but different audio characteristics. For example, singing and yawning may have similar visual appearances when observed through the interior cameras 101D-101E, but singing involves vocalization while yawning does not. By incorporating the audio embeddings into the comparison process, the encoder system 402 may distinguish between singing and yawning based on the presence or absence of vocalization, thereby reducing false positive detections.

The encoder system 402 may further integrate chat prompts with different modalities, such as audio and video, to provide a comprehensive analysis of driver behavior. By aligning language with different modalities, the encoder system 402 may generate prompts that target specific audio-involved behaviors and compare the prompts with corresponding audio embeddings. The integration of audio and video modalities improves the overall effectiveness of distracted driving detection by enabling the encoder system 402 to analyze both visual and auditory aspects of driver behavior.

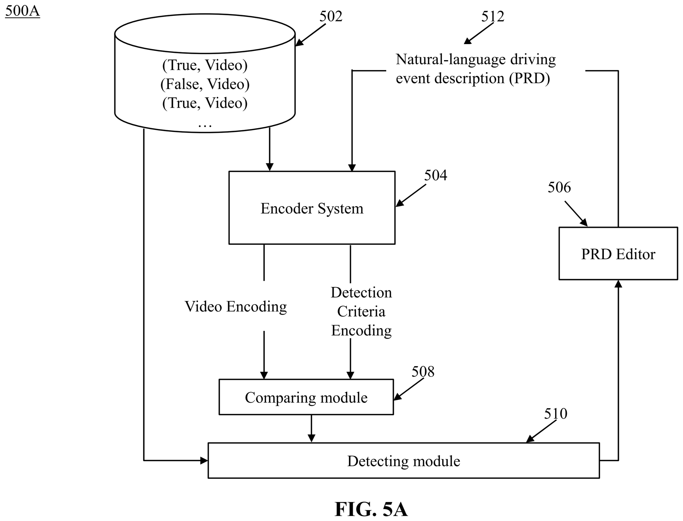

FIG. 5A illustrates a functional block diagram 500A of the apparatus 103 for detection of the driving event using the natural-language driving event description (PRD) prompts, according to an embodiment of the present disclosure. As shown, the apparatus 103 may include a database 502, an encoder system 504, a PRD editor 506, a comparing module 508, and a detecting module 510.

The PRD editor 506 provides a user interface for a developer to input a prompt, i.e., natural-language driving event description 512 that specify detection criteria for various driving event scenarios. The PRD editor 506 may serve as the requirements-specification interface through which developers can enter text-based prompts to describe specific safety features. For example, a developer may enter a prompt such as "Is the hand near the face for more than five seconds?" through the PRD editor 506. The PRD editor 506 enables developers to refine prompts by adding conditions, such as "and not drinking water," to reduce false positives in driving event detection.

As further shown in FIG. 5A, the database 502 stores labeled video data with associated truth values. The database 502 includes entries represented as pairs such as (True, Video) and (False, Video), indicating whether each video includes a particular driving event. The labeled video data stored in the database 502 may be used for testing and validation purposes to evaluate the effectiveness of prompts entered through the PRD editor 506.

The encoder system 504 receives input from both the database 502 and the PRD editor 506. The encoder system 504 generates a video encoding from the labeled video data stored in the database 502 and generates a detection criteria encoding from the natural-language driving event description 512.

Further, the comparing module 508 receives the video encoding and the detection criteria encoding from the encoder system 504. The comparing module 508 computes a difference or similarity between the video encoding and the detection criteria encoding to determine whether the video data matches the specified driving event criteria. The comparing module 508 provides an accuracy score based on existing labeled data, allowing developers to iteratively refine prompts through the PRD editor 506.

The detecting module 510 receives output from the comparing module 508 and also receives input from the PRD editor 506. Based on the comparison results, the detecting module 510 determines whether a driving event is detected or rejected. In an embodiment, feedback may be generated based on the comparison and provided back to refine the prompts through the PRD editor 506, enabling iterative improvement of the detection criteria. For example, if the initial prompt results in too many false alarms where video examples are detected as meeting the PRD criteria but the database label disagrees, the developer may add more specific conditions through the PRD editor 506 to improve accuracy.

In an embodiment, the apparatus 103 may leverage the capabilities of language models to generate comprehensive descriptions for images or video clips. The comprehensive descriptions may include information about bounding boxes and object coordinates, enabling accurate identification and classification of various elements within an image. The language models may generate captions for images that provide detailed descriptions of objects and actions within a frame, which may be used to refine detection criteria and improve the accuracy of driving event detection.

The apparatus 103 may further leverage the capabilities of language models to generate comprehensive descriptions for various scenarios. Just as a human annotator would be given detailed instructions on how to label specific behaviors, the apparatus 103 may generate prompts that provide context and guidelines for detecting distracted behaviors. For example, a prompt may include instructions such as "Pay attention to the driver's hand movements, as they may be holding a phone or another object."

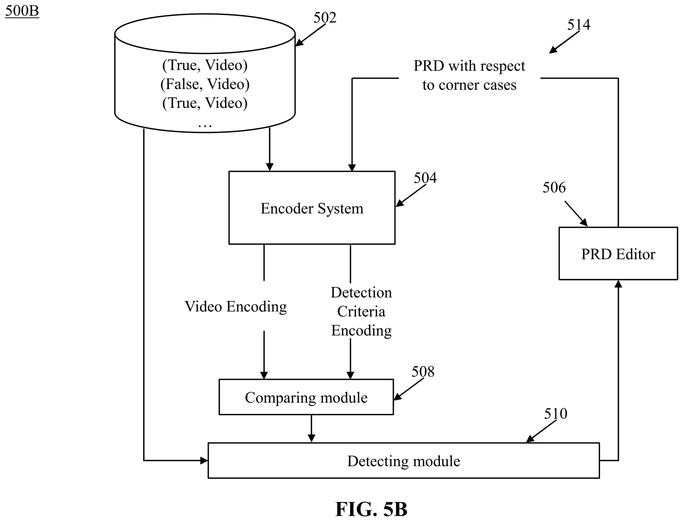

FIG. 5B illustrates a functional block diagram of the apparatus 103 for the detection of the driving event using corner cases, according to an embodiment of the present disclosure. As shown, the apparatus 103 may include the database 502, the encoder system 504, the PRD editor 506, the comparing module 508, and the detecting module 510.

The database 502 stores video data paired with labels indicating whether each video corresponds to a true or false instance of a driving event. The database 502 includes entries in the format of tuples such as (True, Video), (False, Video), and (True, Video), representing labeled video examples used for testing and validation purposes. The labeled video data stored in the database 502 serves as ground truth data against which detection criteria can be tested to evaluate accuracy and identify areas for improvement.

In an embodiment, the encoder system 504 may receive the natural-language driving event description 514 from the PRD editor 506. The PRD editor 506 provides a user interface for a developer to input and refine prompts that specify detection criteria for various driving event scenarios. The PRD editor 506 enables developers to iteratively modify prompts based on feedback received from the comparing module 508 and the detecting module 510.

The encoder system 504 receives input from both the database 502 and the natural-language driving event description 514. The natural-language driving event description 514 may correspond to corner cases. The encoder system 504 comprises aligned video and textual encoders that process the inputs to generate corresponding encodings. The encoder system 504 produces a video encoding from the labeled video data stored in the database 502 and a detection criteria encoding from the natural-language driving event description 514. The video encoding represents the visual content of the labeled video data in the embedding space, while the detection criteria encoding represents the natural-language driving event description in the same embedding space.

In an embodiment, the encoder system 504 (i.e., the generating module 304) may be configured to identify a corner case comprising a driving event that triggers false positive detection. The generating module 304 may then generate a refined driving event description based on the corner case. The generating module 304 may also update the one or more text embeddings based on the refined driving event description. In an exemplary embodiment, the corner cases may refer to rare or exceptional conditions that are not typically covered by standard detection models, but that may be addressed to minimize false positives and improve accurate detection. For example, the corner cases may include scenarios such as a driver holding a water bottle in a manner similar to holding a phone, or a drowsy driving detection system confusing singing with yawning. Traditional models may struggle with these nuanced behaviors, resulting in an increased rate of false alarms that can be both annoying for the driver and detrimental to the system's reputation and efficacy.

The generating module 304 may employ prompt engineering to create specific and detailed queries that highlight and address corner cases. The generating module 304 may utilize language models to generate chat prompts that describe various distracted driving scenarios. For example, a prompt may be "Is the driver's eye closing?" or "Is the driver drowsy?" These prompts may be designed to capture subtle behaviors that indicate distraction or drowsiness. The prompts may be detailed, specifying conditions such as the driver's eyes closing intermittently, head movements, or changes in viewing angles. By providing detailed descriptions, the apparatus 103 may more accurately identify and handle corner cases.

When designing prompts for corner case detection, the generating module 304 may consider the context and details of the task. For example, a prompt for detecting phone usage may be "Is the driver talking on the phone?" This prompt may be expanded to include additional details, such as "Is the driver holding the phone close to their ear?" or "Is the driver gesturing as if they are talking on the phone?" These detailed prompts help the generating module 304 differentiate between similar actions, such as holding a phone versus holding a bottle of water.

In a further embodiment, the natural-language driving event description 514 may include chat-prompt-generated corner-case queries targeting rare or subtle behaviors. The chat-prompt-generated corner-case queries may be generated by language models that analyze patterns in detection errors and generate targeted queries to address specific corner case scenarios. For instance, if the apparatus 103 frequently confuses a driver scratching their beard with a driver holding a phone, a language model may generate a corner-case query such as "Is the driver scratching their face without holding an object?" to distinguish between these visually similar actions.

As further shown in FIG. 5B, the comparing module 508 receives the video encoding and the detection criteria encoding from the encoder system 504. The comparing module 508 computes a difference or similarity between the video encoding and the detection criteria encoding to determine whether the video data matches the specified driving event description. The comparing module 508 generates an accuracy metric based on testing the driving event description against the labeled video data stored in the database 502. The accuracy metric indicates how well the detection criteria specified in the natural-language driving event description 514 align with the ground truth labels in the database 502.

The detecting module 510 receives output from the comparing module 508 and determines whether a driving event is detected or rejected based on the comparison results. The detecting module 510 also receives input from the PRD editor 506, allowing feedback to be generated based on the comparison and enabling the prompt to be refined based on the feedback. The feedback loop between the detecting module 510 and the PRD editor 506 supports iterative refinement of the detection criteria to improve accuracy and reduce false positives in driving event detection.

In a further embodiment, the apparatus 103 may generate synthetic test cases specifically designed to validate proposed modifications to driving event descriptions. The synthetic test cases may be generated based on identified error patterns and corner case scenarios. The synthetic test cases may include video segments exhibiting features specifically addressed by a proposed modification, video segments containing similar but distinct driving events, and video segments previously associated with detection errors. By testing proposed modifications against the synthetic test cases, the apparatus 103 may evaluate whether the modifications improve detection accuracy for corner case scenarios without introducing new detection errors.

A language model may decompose a natural language driving event description into constituent criteria. The language model may test each criterion independently against labeled video data to identify specific criteria contributing to detection errors. For example, if a driving event description specifies "hand near face for more than five seconds while holding an object," the language model may decompose this description into separate criteria: "hand near face," "duration exceeds five seconds," and "holding an object." The language model may then test each criterion independently to determine which criterion contributes to false positive detections. If the "holding an object" criterion is found to contribute to false positives when drivers are holding water bottles, the language model may suggest modifications to that specific criterion.

A language model may generate multiple alternative phrasings for the same driving event criteria. The language model may test each phrasing against labeled video data. The language model may select phrasings that produce improved detection accuracy. For example, if a driving event description specifies "driver using smartphone," the language model may generate alternative phrasings such as "driver holding rectangular device near ear," "driver looking at handheld screen," or "driver tapping on handheld device." Each alternative phrasing may be tested against labeled video data to determine which phrasing produces the most accurate detection results. The language model may then select the phrasing that produces improved detection accuracy for use in the refined driving event description.

The process of identifying corner cases and generating refined driving event descriptions involves analyzing detection errors to identify patterns. When the apparatus 103 generates false positive detections, the detection errors may be analyzed to identify common characteristics among the false positive detections. For example, if multiple false positive detections occur when drivers are drinking water, the apparatus 103 may identify "drinking water" as a corner case that triggers false positive detection. Based on this identification, the apparatus 103 may generate a refined driving event description that includes a suppressor condition for drinking water, such as "hand near face for more than five seconds and not drinking water."

Once a refined driving event description is generated, the generating module 304 updates the one or more text embeddings based on the refined driving event description. The updated text embeddings incorporate the modifications specified in the refined driving event description, enabling the apparatus 103 to detect driving events while avoiding false positive detections associated with the identified corner cases. The updated text embeddings may be deployed to devices for real-time driving event detection, enabling the devices to benefit from the refined detection criteria without requiring extensive retraining.

Accordingly, in an embodiment, with reference to FIG. 5B, the comparing module 508 (same as the comparing module 306) may be configured to test the driving event description against labeled video data. The comparing module 508 may generate an accuracy metric based on the testing. The detecting module 510 may then iteratively refine the driving event description based on the accuracy metric. The detecting module 510 may generate an output indicating driving event detection, rejection, or corner case detection based on the comparison results. In particular, a developer may enter an initial prompt through the PRD editor 506 specifying detection criteria for a driving event. The encoder system 504 generates a detection criterion encoding from the initial prompt and generates video encodings from the labeled video data in the database 502. The comparing module 508 compares the detection criteria encoding with the video encodings and generates the accuracy metric indicating how well the initial prompt performs against the labeled video data. If the accuracy metric indicates that the initial prompt results in false positive detections where video examples are detected as meeting the detection criteria but the database label indicates otherwise, the detecting module 510 may refine the prompt through the PRD editor 506. The output in such cases may indicate rejection or corner case detection, prompting the developer to address the identified discrepancy. The developer may add more specific conditions to the prompt to address the false positive detections. For example, if the initial prompt detects a driver holding a hand near the face but incorrectly triggers when the driver is drinking water, the developer may add a suppressor condition such as "and not drinking water" to the prompt. This refinement process addresses corner cases where visually similar actions may be incorrectly classified. The refined prompt may then be tested again against the labeled video data to generate an updated accuracy metric.

The iterative refinement process continues until the accuracy metric meets a predetermined criterion or until the developer determines that the detection criteria are sufficiently accurate for deployment. Each iteration involves testing the driving event description against the labeled video data, generating an accuracy metric based on the testing, and iteratively refining the driving event description based on the accuracy metric. The iterative process enables continuous optimization of the detection criteria to improve detection accuracy and reduce false positives.

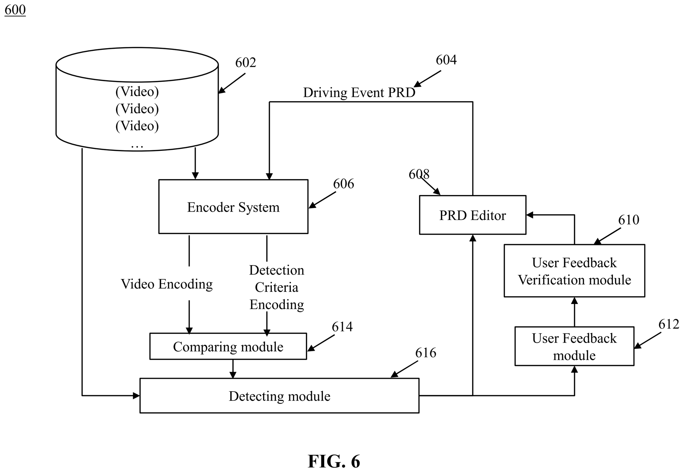

FIG. 6 illustrates a functional block diagram 600 of the apparatus 103 for detection of the driving event using user feedback, according to an embodiment of the present disclosure. As shown, the apparatus 103 includes a video database 602, driving event PRD 604, an encoder system 606, a PRD editor 608, a user feedback verification module 610, a user feedback module 612, a comparing module 614, and a detecting module 616.

The video database 602 stores video data, which may include multiple video files. The video database 602 provides video data to the encoder system 606 for processing. The video data stored in the video database 602 may include real-time video captured from the one or more vehicle-mounted cameras 101, such as the exterior cameras 101A-101C or the interior cameras 101D-101E.

The PRD editor 608 provides a user interface for a developer to input prompts, i.e., driving event PRD 604 that specify detection criteria for various driving event scenarios. The PRD editor 608 enables developers to refine prompts based on feedback received through the user feedback verification module 610.

The encoder system 606 receives input from both the video database 602 and the PRD editor 608. The encoder system 606 includes video encoding functionality and detection criteria encoding functionality. The encoder system 606 processes the video data from the video database 602 to generate video encodings and processes the driving event descriptions to generate detection criteria encodings. The video encodings and the detection criteria encodings are generated in a shared embedding space, enabling comparison between video content and textual descriptions of driving events.

The comparing module 614 receives outputs from the encoder system 606 and computes differences between the video encoding and the detection criteria encoding. The comparing module 614 determines similarity values between the video encoding and the detection criteria encoding in the embedding space. Based on the output of the comparing module 614, the detecting module 616 determines whether a driving event has occurred. When the comparing module 614 indicates that the video encoding is within a threshold distance of the detection criteria encoding, the detecting module 616 generates the alert, indicating that a driving event has been detected.

The detecting module 616 is connected to the user feedback module 612, enabling users, i.e., the drivers, to provide feedback regarding detected events. When a driving event is detected, the detecting module 616 generates an alert to notify the driver of the detected event. In response to the alert, the driver may provide feedback through the user feedback module 612. The user feedback module 612 may include natural language input describing whether the driver agrees or disagrees with the driving event detection. For example, if the detecting module 616 generates an alert for distracted driving, the driver may respond with feedback such as "I was drinking water" through the user feedback module 612.

The user feedback module 612 is connected to the user feedback verification module 610, which validates and verifies the feedback received from drivers. The user feedback verification module 610 processes the user feedback module 612 to determine whether the feedback is accurate and reliable.

The user feedback verification module 610 is configured to analyze the video data to confirm the presence of one or more objects referenced in the user feedback and verify the user feedback based on the analysis. When a driver provides feedback in response to an alert, the feedback may reference specific objects or actions that the driver claims were occurring at the time of the detected event. For example, if a driver provides feedback stating "I was drinking water," the feedback references a water bottle or other container. The verification process involves analyzing the video data captured at the time of the detected event to determine whether the referenced object is present in the video data.

The analysis of video data to confirm the presence of objects referenced in user feedback involves processing the video data using object detection algorithms or neural networks trained to recognize specific objects. For instance, if a driver claims to have been drinking water, the verification process may apply an object detection model to the video data to detect the presence of a water bottle, cup, or other drinking container. The object detection model may generate bounding boxes around detected objects and may provide confidence scores indicating the likelihood that each detected object corresponds to the referenced object. If the object detection model detects a water bottle with a confidence score above a predetermined threshold, the verification process confirms that the object referenced in the user feedback is present in the video data.

Once the analysis of video data confirms or fails to confirm the presence of objects referenced in the user feedback, the user feedback verification module 610 generates a verification result indicating whether the user feedback is verified as accurate. If the analysis confirms the presence of the referenced object, the user feedback is verified as accurate. If the analysis fails to confirm the presence of the referenced object, the user feedback may be flagged as potentially inaccurate or may be rejected. The verification result is used to determine whether the user feedback should be incorporated into the refinement of detection criteria.

The verification process may cross-reference user feedback with additional data sources beyond video data. For example, the verification process may analyze sensor data from inertial sensors, GPS data, or vehicle OBD-II port data to corroborate the user feedback. If a driver claims to have been adjusting vehicle controls at the time of a detected event, the verification process may analyze vehicle sensor data to determine whether control adjustments were made at the corresponding time. By cross-referencing user feedback with multiple data sources, the verification process improves the reliability of feedback verification and reduces the risk of incorporating inaccurate feedback into detection criteria refinement.

The user feedback verification module 610 communicates with the PRD editor 608 upon verification of the user feedback module 612. When the user feedback module 612 is verified as accurate, the PRD editor 608 refines the prompts and detection criteria used by the driving event PRD 604. The refinement may involve adding suppressor conditions to the driving event description to address scenarios identified through driver feedback. For example, if multiple drivers report that they were drinking water when an alert was triggered, and the user feedback verification module 610 confirms these reports by analyzing video footage, the PRD editor 608 may generate a new prompt segment to differentiate between drinking water and using a smartphone. The refined prompt may then be applied to subsequent events to improve detection accuracy.

The detecting module 616 may include a dynamic labeling capability. When an unrecognized activity is encountered, a feedback loop with human annotators or an automated suggestion mechanism may label the new activity. The new label, along with a corresponding vector representation, may be added to the model without requiring complete retraining. For example, if the detecting module 616 encounters a driver holding a walkie-talkie, which may not have been included in the original training data, the user feedback module 612 may indicate that the driver was using a walkie-talkie. Upon verification by the user feedback verification module 610, the detecting module 616 may label this new activity and add the label to the detection model. The dynamic labeling capability enables the detecting module 616 to adapt to new forms of distractions without requiring extensive retraining.

The detecting module 616 incorporates real-time feedback from drivers, which may be verified against additional data sources such as video footage or sensor data to ensure feedback accuracy and reliability. The verification process mitigates the risk of inaccurate responses from drivers. By cross-referencing driver feedback with video footage and sensor data, the user feedback verification module 610 confirms that the feedback accurately reflects the driver's behavior at the time of the detected event. The verification process enhances the reliability of the feedback used to refine detection criteria.

The user feedback module 612 is configured to receive user feedback from a plurality of drivers, aggregate the received user feedback, identify one or more similar patterns in the aggregated feedback, and generate one or more refined text embeddings based on the identified one or more similar patterns. The apparatus 103 may be deployed across a fleet of vehicles, with each vehicle capturing video data and generating driving event detections. When driving events are detected across the fleet, drivers of the respective vehicles may provide feedback regarding the detected events. The apparatus 103 may collect user feedback from the plurality of drivers through a centralized platform, such as a cloud-based server that receives feedback transmissions from devices deployed in the vehicles.

The aggregation process involves collecting user feedback from multiple drivers and organizing the feedback into a structured format suitable for analysis. The aggregated feedback may be stored in a database that associates each feedback entry with metadata such as the type of driving event detected, the time and location of the detection, the driver identifier, and the content of the feedback. The aggregation process may normalize the feedback content to facilitate pattern identification, such as by categorizing feedback into predefined categories or by extracting keywords from natural language feedback.

Pattern identification involves analyzing the aggregated feedback to detect recurring themes or common characteristics among feedback entries. For example, if multiple drivers provide feedback indicating that they were drinking water when a phone usage alert was triggered, the pattern identification process identifies "drinking water" as a similar pattern associated with false positive phone usage detections. The pattern identification process may employ statistical analysis, clustering algorithms, or natural language processing techniques to identify similar patterns in the aggregated feedback. Patterns may be identified based on the frequency with which specific feedback content appears, the correlation between feedback content and specific types of driving events, or the similarity of feedback content across different drivers.

Once similar patterns are identified in the aggregated feedback, the generating module 304 generates refined text embeddings that incorporate the identified patterns into detection criteria. For example, if the pattern identification process identifies "drinking water" as a common cause of false positive phone usage detections, the generating module 304 generates a refined text embedding that includes a suppressor condition for drinking water. The refined text embedding is generated by modifying a natural language driving event description to include the suppressor condition and then encoding the modified description using a text encoder. The refined text embedding is then deployed to devices for use in subsequent driving event detection, enabling the devices to avoid false positive detections associated with the identified pattern.

The user feedback verification module 610 is configured to analyze the user feedback to identify one or more errors in the detection of the driving event and generate updated one or more text embeddings based on the identified one or more errors. The analysis involves examining user feedback to determine whether the feedback indicates that a detection was incorrect. For example, if a driver provides feedback stating, "This was not distracted driving, I was just scratching my face," the feedback indicates that the detection was a false positive error. The analysis process categorizes errors into different types, such as false positive errors, where a driving event was incorrectly detected, or false negative errors, where a driving event occurred but was not detected. The analysis also identifies specific characteristics of the errors, such as the type of action that was misidentified or the conditions under which the error occurred.

Once errors in detection are identified through analysis of user feedback, the generating module 304 generates updated text embeddings that address the identified errors. For example, if the analysis identifies that scratching the face is frequently misidentified as phone usage, the generating module 304 generates an updated text embedding that includes a discriminator to distinguish between scratching the face and holding a phone. The updated text embedding is generated by modifying the natural language driving event description to include the discriminator and then encoding the modified description using the encoder system 606. The updated text embedding then replaces the previous text embedding in the apparatus 103, enabling improved detection accuracy for subsequent driving events.

In a further embodiment, the detecting module 616 fine-tunes a vision encoder and other components of the detection model based on aggregated driver feedback. By collecting and analyzing feedback from multiple drivers, the detecting module 616 identifies common patterns and corner cases that were not initially considered. The aggregated feedback is used to fine-tune the encoder system 606 and other components of the detection model, enabling the detecting module 616 to be continuously updated and aligned with real-world conditions. For example, if a significant number of drivers report false positives related to drinking water, the detecting module 616 uses the aggregated feedback to generate refined text embeddings that address this specific case.

In an embodiment, the transceiver module 302 may be configured to forward, to a cloud platform, the one or more video embeddings and the one or more text embeddings for comparison. Then, the transceiver module 302 may receive, from the cloud platform, the at least one similarity value in response to forwarding the one or more video embeddings and the one or more text embeddings. A distributed architecture may be provided for edge-cloud coordinated driving event detection. The distributed architecture enables efficient resource utilization by performing initial detection at the apparatus 103 while leveraging cloud computing for complex analysis and pattern recognition. A cloud platform may deploy pre-trained video encoders and text embeddings to the apparatus 103 installed in the vehicle 100, enabling real-time local detection while leveraging the cloud platform for further analysis and model refinement.

In an embodiment, the apparatus 103 may utilize an 8-bit quantized encoder operating at a minimum of 10 frames per second for efficient local processing. The 8-bit quantization reduces computational requirements and memory footprint of the encoder while maintaining sufficient accuracy for preliminary event detection. The minimum frame rate of 10 frames per second enables the apparatus 103 to capture temporal dynamics of driver behavior while operating within computational constraints of the apparatus 103.

The text embeddings deployed to the apparatus 103 may be compressed to 64-256 dimensions using principal component analysis for efficient storage and processing on the apparatus 103. The dimensionality reduction through principal component analysis preserves semantic relationships between text embeddings while reducing storage requirements and computational overhead for similarity calculations. The compressed text embeddings enable the apparatus 103 to store multiple driving event descriptions and perform efficient comparisons with video embeddings generated from live video data.

The transceiver module 302 transmits the video embeddings generated by the generating module 304 from live video data and the text embeddings generated by the generating module 304 corresponding to driving event descriptions to the cloud platform for advanced processing. The cloud platform performs more computationally intensive similarity calculations and returns the at least one similarity value to the apparatus 103 for use in driving event detection by the detection module 310.

The distributed architecture employs a two-tier confidence scoring mechanism. At a first tier, the apparatus 103 applies lightweight detection thresholds optimized for recall through multi-criteria fusion of embedding distances and local context. The lightweight detection thresholds are configured to identify potential driving events with high sensitivity, accepting a higher rate of false positives in exchange for reduced false negatives. The multi-criteria fusion combines embedding distances calculated between video embeddings and text embeddings with local context information such as vehicle speed, time of day, or driver history to generate preliminary confidence scores.

The comparing module 306 is configured to compute a preliminary similarity-based confidence score corresponding to a driving event description using a recall-optimized threshold. The preliminary similarity-based confidence score is computed based on the comparison of video embeddings generated from live video data with text embeddings corresponding to driving event descriptions. The recall-optimized threshold is configured to prioritize detection sensitivity, accepting a higher rate of potential false positives in exchange for reduced false negatives. The recall-optimized threshold is set at a level that captures a broad range of potential driving events, including events that may have lower similarity values but that may still represent actual driving events requiring further validation.

The detection module 310 identifies a potential driving event based on the preliminary similarity-based confidence score. When the preliminary similarity-based confidence score exceeds the recall-optimized threshold, the detection module 310 identifies the corresponding video segment as containing a potential driving event. The identification is based on the preliminary similarity-based confidence score meeting or exceeding the recall-optimized threshold, indicating that the video content exhibits sufficient similarity to the driving event description to warrant further analysis. The potential driving event represents a candidate detection that requires validation before being confirmed as an actual driving event.

The transceiver module 302 transmits the identified potential driving event and the corresponding preliminary similarity-based confidence score to the cloud platform. When a potential driving event is identified, the transceiver module 302 transmits relevant video segments along with the preliminary similarity-based confidence score to the cloud platform for advanced processing. The transmission includes metadata associated with the potential driving event, such as timestamp, location, and the driving event description against which the potential driving event was detected. The cloud platform receives transmissions from multiple devices deployed across a fleet of vehicles, enabling aggregation and analysis of potential driving events from multiple sources.

The transceiver module 302 receives a validation confidence score corresponding to the identified potential driving event. The cloud platform processes the transmitted potential driving event using more computationally intensive algorithms. The cloud platform employs deep neural networks for high-precision event classification and temporal pattern recognition across extended video sequences. The deep neural networks analyze the video segments associated with the potential driving event to determine whether the potential driving event represents an actual driving event or a false positive detection. The cloud platform generates the validation confidence score based on the analysis and transmits the validation confidence score back to the apparatus 103.

The validation confidence score indicates validation or rejection of the potential driving event. When the cloud platform determines that the potential driving event represents an actual driving event, the validation confidence score indicates validation of the potential driving event. When the cloud platform determines that the potential driving event represents a false positive detection, the validation confidence score indicates rejection of the potential driving event. The detection module 310 uses the validation confidence score to determine whether to generate an alert for the driving event or to suppress the detection as a false positive.

At a second tier of the two-tier confidence scoring mechanism, the cloud platform performs precision-focused validation using more sophisticated models and broader contextual data. The cloud platform employs more computationally intensive algorithms, including deep neural networks for high-precision event classification and temporal pattern recognition across extended video sequences, to validate or overrule detections. The cloud platform incorporates historical patterns, cross-validated detection criteria, and geospatial clustering analysis into the validation process. The precision-focused validation at the cloud platform reduces false positive detections that pass through the recall-optimized detection.

The precision-focused validation incorporates historical patterns associated with the driver, the vehicle, or the geographic location where the potential driving event was detected. The cloud platform analyzes historical detection data to determine whether similar potential driving events from the same driver or vehicle have been validated or rejected in the past. The precision-focused validation also incorporates cross-validated detection criteria that have been refined through iterative testing against labeled video data. The cross-validated detection criteria enable the cloud platform to apply detection logic that has been validated across multiple scenarios and conditions.

The precision-focused validation further incorporates geospatial clustering analysis. The geospatial clustering analysis identifies patterns in driving event detections based on geographic location. For example, if multiple potential driving events are detected at a particular intersection or road segment, the geospatial clustering analysis determines whether the detections represent actual driving events or whether environmental factors at that location contribute to false positive detections. The geospatial clustering analysis enables the cloud platform to adjust validation criteria based on location-specific patterns, improving validation accuracy for potential driving events detected at locations with known detection challenges.

A cloud server may implement a batching mechanism that aggregates potential driving events from multiple devices through temporal, spatial, and analysis-based clustering. The batching mechanism collects potential driving event detections transmitted from devices deployed across a fleet of vehicles and organizes the collected detections into batches for efficient processing and pattern analysis.

Temporal clustering groups potential driving events based on the time at which the events were detected. The temporal clustering identifies patterns in driving event detections that occur during specific time periods, such as morning commute hours, evening hours, or nighttime driving periods. For example, if multiple potential driving events related to drowsy driving are detected across different vehicles during late-night hours, the temporal clustering groups these detections together to enable analysis of time-based patterns. The temporal clustering also identifies patterns in detection frequency over time, such as increases in certain types of driving event detections during particular seasons or weather conditions.

Spatial clustering groups potential driving events based on the geographic location at which the events were detected. The spatial clustering utilizes GPS coordinates or other location data transmitted with the potential driving event detections to identify geographic patterns. For example, if multiple potential driving events are detected at a particular intersection, highway segment, or geographic region, the spatial clustering groups these detections together to enable analysis of location-based patterns. The spatial clustering identifies locations where environmental factors, road conditions, or traffic patterns contribute to increased driving event detections or to increased false positive detections.

Analysis-based clustering groups potential driving events based on characteristics of the detections themselves, such as the type of driving event detected, the confidence scores associated with the detections, or the validation status of the detections. The analysis-based clustering identifies patterns among detections that share similar characteristics. For example, if multiple potential driving events are detected with similar preliminary confidence scores but are subsequently rejected during validation, the analysis-based clustering groups these detections together to enable analysis of common factors contributing to false positive detections. The analysis-based clustering also groups detections based on the specific driving event description against which the detections were made, enabling targeted analysis of detection performance for specific types of driving events.

The batching mechanism enables identification of patterns across a fleet of vehicles that would not be apparent from analysis of individual vehicle data. By aggregating potential driving events from multiple devices and applying temporal, spatial, and analysis-based clustering, the cloud server identifies systemic patterns in driving event detections. The identified patterns inform refinement of detection criteria, adjustment of detection thresholds, or modification of driving event descriptions to improve detection accuracy across the fleet.

The cloud server may maintain a centralized database of event detections with validation status, metadata, and resolution pathways in a hierarchical structure optimized for pattern recognition queries. The centralized database stores records of potential driving events detected by devices across the fleet, along with associated information that enables comprehensive analysis and pattern recognition.

Each event detection record stored in the centralized database includes a validation status indicating whether the potential driving event was validated as an actual driving event or rejected as a false positive detection. The validation status is updated as potential driving events undergo validation processing at the cloud server. The validation status enables queries that filter event detections based on whether the detections were confirmed or rejected, facilitating analysis of detection accuracy and identification of patterns in validated versus rejected detections.

Each event detection record also includes metadata associated with the potential driving event. The metadata includes temporal information such as the timestamp at which the event was detected, spatial information such as the GPS coordinates or geographic region where the event was detected, and contextual information such as vehicle speed, lighting conditions, or driver identifier. The metadata also includes information about the detection process, such as the driving event description against which the detection was made, the preliminary confidence score computed at the apparatus 103, and the validation confidence score computed at the cloud server. The metadata enables queries that filter and analyze event detections based on various criteria, facilitating the identification of patterns associated with specific conditions or contexts.

Each event detection record further includes resolution pathways indicating how the detection was processed and resolved. The resolution pathways indicate whether the detection was validated through automated processing, escalated to human review, or resolved through driver feedback verification. The resolution pathways also indicate any modifications to detection criteria that resulted from analysis of the detection. The resolution pathways enable tracking of how different types of detections are processed and inform optimization of detection and validation workflows.

The hierarchical structure of the centralized database organizes event detection records in a manner that facilitates pattern recognition queries. The hierarchical structure organizes detections by driving event type at a first level, by validation status at a second level, and by temporal or spatial characteristics at subsequent levels. The hierarchical organization enables efficient queries that traverse the hierarchy to identify patterns at different levels of granularity. For example, a query may traverse the hierarchy to identify all rejected detections for a specific driving event type that occurred within a particular geographic region during a specified time period. The hierarchical structure is optimized for pattern recognition queries through indexing, caching, or other database optimization techniques that reduce query latency and enable real-time pattern analysis.

In an embodiment, the apparatus 103 may implement continuous A/B testing of detection parameters across device subsets to generate refined text embeddings. The A/B testing involves deploying different versions of detection parameters to different subsets of devices and comparing detection performance across the subsets to identify parameter configurations that produce improved detection accuracy.

The A/B testing involves creating multiple variants of text embeddings or detection thresholds for a particular driving event description. A first variant is deployed to a first subset of devices, and a second variant is deployed to a second subset of devices. The devices in each subset perform driving event detection using the respective variant, and detection results are transmitted to the cloud server for analysis. The cloud server compares detection performance metrics between the subsets, such as detection accuracy, false positive rate, false negative rate, or validation rate. Based on the comparison, the cloud server determines which variant produces improved detection performance.

The A/B testing is continuous, with new variants being generated and tested on an ongoing basis as detection criteria are refined through iterative processes. The continuous A/B testing enables the apparatus 103 to evaluate proposed modifications to detection criteria before deploying the modifications across the entire fleet. By testing modifications on device subsets before full deployment, the A/B testing reduces the risk of deploying modifications that inadvertently degrade detection performance.

The A/B testing generates refined text embeddings based on the results of the testing. When a variant demonstrates improved detection performance compared to other variants, the cloud server generates refined text embeddings that incorporate the parameter configurations of the improved variant. The refined text embeddings are then prepared for deployment to devices across the fleet.

The apparatus 103 deploys updated text embeddings through a secure update protocol using staged rollout mechanisms with automated fallback procedures. The secure update protocol ensures that updated text embeddings are transmitted to devices in a manner that protects the integrity and confidentiality of the embeddings. The secure update protocol employs encryption, authentication, and integrity verification to prevent unauthorized modification or interception of the updated text embeddings during transmission.

The staged rollout mechanisms deploy updated text embeddings to devices in phases rather than deploying to all devices simultaneously. The staged rollout begins with deployment to a small subset of devices, followed by monitoring of detection performance on the subset. If detection performance on the initial subset meets predetermined criteria, the rollout proceeds to additional subsets until the updated text embeddings are deployed across the entire fleet. The staged rollout enables early detection of issues with updated text embeddings before the updates affect the entire fleet.

The automated fallback procedures enable devices to revert to previous text embeddings if issues are detected with updated text embeddings. If detection performance degrades after deployment of updated text embeddings, the automated fallback procedures trigger reversion to the previous text embeddings that were in use before the update. The automated fallback procedures reduce the impact of problematic updates by enabling rapid recovery to a known-good configuration.

Once prompts have been refined and optimized through the iterative refinement processes described herein, the refined prompts are deployed back to the apparatus 103 to minimize the need for continuous cloud communication. The deployment of refined prompts enables real-time detection without constant data uploads to the cloud platform. The apparatus 103 uses the optimized prompts to accurately detect driving behaviors locally, reducing latency and bandwidth requirements while maintaining detection accuracy.

The apparatus 103 for refining driving event detection criteria may maintain detailed audit logs of all modifications, test results, and verification decisions. The audit logs enable systematic analysis of refinement patterns and continuous improvement of the optimization strategy. Each entry in the audit logs includes information about a proposed modification, including the original driving event description, the proposed change to the description, the rationale for the proposed change, and the source of the proposed change, such as automated language model suggestion or human developer input.

Each audit log entry also includes test results associated with the proposed modification. The test results include accuracy metrics computed by testing the proposed modification against the development set and the validation set. The test results also include detailed breakdowns of detection performance by driving event type, environmental condition, or other characteristics. The test results further include comparisons between the proposed modification and the original driving event description, indicating the magnitude and direction of performance changes attributable to the modification.

Each audit log entry further includes verification decisions indicating whether the proposed modification was accepted, rejected, or subjected to additional review. The verification decisions include information about the verification process, such as whether the modification was verified through automated testing, human review, or a combination of both. The verification decisions also include reviewer feedback and acceptance metrics associated with the modification. For modifications that were rejected, the audit log entry includes information about the reasons for rejection and any follow-up actions taken.

The audit logs enable systematic analysis of refinement patterns by providing a comprehensive record of all modifications attempted and their outcomes. Analysis of the audit logs identifies patterns in successful modifications, such as common characteristics of modifications that produce accuracy improvements or common contexts in which modifications are most effective. Analysis of the audit logs also identifies patterns in unsuccessful modifications, such as common characteristics of modifications that are rejected or that produce degraded performance. The identified patterns inform the optimization strategy by guiding the generation of proposed modifications toward approaches that have historically produced successful outcomes.

The audit logs also enable continuous improvement of the optimization strategy by providing data for evaluation of the refinement process itself. Metrics computed from the audit logs indicate the overall effectiveness of the refinement process, such as the proportion of proposed modifications that are accepted, the average accuracy improvement produced by accepted modifications, or the time required to refine detection criteria to meet predetermined accuracy thresholds. Trends in these metrics over time indicate whether the optimization strategy is improving or degrading. The audit logs enable identification of bottlenecks or inefficiencies in the refinement process that may be addressed through modifications to the optimization strategy.

In an embodiment, the apparatus 103 for refining driving event detection criteria may track detailed correlations between modification types and accuracy improvements through a specialized metrics engine. The specialized metrics engine maintains statistical significance measures for each modification category. The modification categories include different types of changes to driving event descriptions, such as additions of suppressor conditions, refinements of trigger conditions, modifications to corner case specifications, or adjustments to hierarchical event detection parameters. For each modification category, the specialized metrics engine tracks how modifications of that category affect detection accuracy, false positive rates, false negative rates, and other performance metrics.

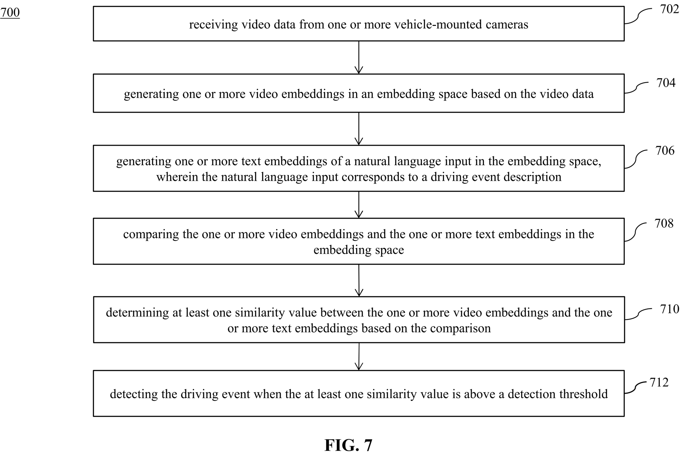

FIG. 7 illustrates a flowchart of a method 700 for detecting a driving event, according to an embodiment of the present disclosure. The method 700 may be performed by the apparatus 103.

At step 702, the method 700 may include receiving the video data from one or more vehicle-mounted cameras 101. At step 704, the method 700 may include generating the one or more video embeddings in the embedding space based on the video data. At step 706, the method 700 may include generating the one or more text embeddings of the natural language input in the embedding space. The natural language input may correspond to the driving event description. At step 708, the method 700 may include comparing the one or more video embeddings and the one or more text embeddings in the embedding space. At step 710, the method 700 may include determining the at least one similarity value between the one or more video embeddings and the one or more text embeddings based on the comparison. At step 712, the method 700 may include detecting the driving event when the at least one similarity value is above a detection threshold.

The method 700 may further comprise generating the alert in response to detecting the driving event.

Accordingly, the present disclosure provides various advantages. The disclosed techniques offer a highly adaptive and reliable driving event detection framework by combining zero-shot and one-shot learning with a hierarchical, multi-modal detection architecture. This enables accurate identification of both common and rare safety-critical events without reliance on large training datasets, while minimizing false positives through structured trigger and suppression logic. Verified user feedback, iterative refinement, and continuous A/B testing ensure ongoing accuracy improvements without performance regression. The edge-cloud deployment balances real-time responsiveness with high-precision validation, and safety-aware thresholding prioritizes rigorous validation for critical events. Together, these capabilities deliver a scalable, continuously improving solution that maintains high detection sensitivity, robustness, and operational safety across diverse driving environments.

Unless otherwise defined, all technical and scientific terms used herein have the same meaning as commonly understood by one ordinary skilled in the art to which this invention belongs. The system, methods, and examples provided herein are illustrative only and not intended to be limiting.

While specific language has been used to describe the present subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practised with modification within the scope of the embodiments as described herein.

## Claims

1. A method for detecting a driving event, comprising:
receiving video data from one or more vehicle-mounted cameras;
generating one or more video embeddings in an embedding space based on the video data;
generating one or more text embeddings of a natural language input in the embedding space, wherein the natural language input corresponds to a driving event description;
comparing the one or more video embeddings and the one or more text embeddings in the embedding space;
determining at least one similarity value between the one or more video embeddings and the one or more text embeddings based on the comparison; and
detecting the driving event when the at least one similarity value is above a detection threshold.

2. The method of claim 1, further comprising:
generating an alert in response to detecting the driving event.

3. The method of claim 1 or claim 2, wherein generating the one or more video embeddings comprises:
generating the one or more video embeddings using an encoder system comprising aligned one or more video encoders and one or more textual encoders.

4. The method of any preceding claim, wherein generating the one or more text embeddings comprises:
receiving, via a requirements-specification interface, a natural-language driving event description specifying detection criteria, wherein the detection criteria includes at least one of a trigger condition, one or more suppressor conditions configured for reducing false positives, and an escalation condition; and
generating the one or more text embeddings based on the natural-language driving event description.

5. The method of any preceding claim, further comprising:
identifying a corner case comprising a driving event that triggers false positive detection;
generating a refined driving event description based on the corner case; and
updating the one or more text embeddings based on the refined driving event description.

6. The method of any preceding claim, wherein detecting the driving event comprises:
detecting the driving event using a zero-shot learning process, wherein the zero-shot learning process is configured to detect a previously unseen driving event based on pre-trained knowledge of vehicle-related scenarios.

7. The method of claim 2, further comprising:
receiving user feedback in response to the alert;
verifying the user feedback using the video data; and
refining the driving event description based on the verified user feedback.

8. The method of claim 7, further comprising:
receiving user feedback from a plurality of drivers;
aggregating the received user feedback;
identifying one or more similar patterns in the aggregated feedback; and
generating one or more refined text embeddings based on the identified one or more similar patterns.

9. The method of any preceding claim, further comprising:
receiving a safety priority designation associated with the driving event; and
adjusting the detection threshold based on the safety priority designation.

10. The method of any preceding claim, further comprising:
testing the driving event description against labeled video data;
generating an accuracy metric based on the testing; and
iteratively refining the driving event description based on the accuracy metric.

11. The method of any preceding claim, wherein determining the at least one similarity value comprises:
forwarding, to a cloud platform, the one or more video embeddings and the one or more text embeddings for comparison; and
receiving, from the cloud platform, the at least one similarity value in response to forwarding the one or more video embeddings and the one or more text embeddings.

12. The method of claim 11, further comprising:
computing a preliminary similarity-based confidence score corresponding to the driving event description using a recall-optimized threshold;
identifying potential driving event based on the preliminary similarity-based confidence score;
transmitting the identified potential driving event and the corresponding preliminary similarity-based confidence score to the cloud platform; and
receiving a validation confidence score corresponding to the identified potential driving event, wherein the validation confidence score indicates validation or rejection of the potential driving event.

13. The method of any preceding claim, wherein the driving event description comprises hierarchical event detection parameters.

14. An apparatus for detecting a driving event, comprising:
a memory storing instructions; and
at least one processor executing the instructions stored in the memory and configured to:
receive video data from one or more vehicle-mounted cameras;
generate one or more video embeddings in an embedding space based on the video data;
generate one or more text embeddings of a natural language input in the embedding space, wherein the natural language input corresponds to a driving event description;
compare the one or more video embeddings and the one or more text embeddings in the embedding space;
determine at least one similarity value between the one or more video embeddings and the one or more text embeddings based on the comparison; and
detect the driving event when the at least one similarity value is above a detection threshold.

15. A non-transitory computer-readable medium comprising: one or more instructions that, when executed by an apparatus comprising one or more processors, cause the one or more processors to:
receive video data from one or more vehicle-mounted cameras;
generate one or more video embeddings in an embedding space based on the video data;
generate one or more text embeddings of a natural language input in the embedding space, wherein the natural language input corresponds to a driving event description;
compare the one or more video embeddings and the one or more text embeddings in the embedding space;
determine at least one similarity value between the one or more video embeddings and the one or more text embeddings based on the comparison; and
detect the driving event when the at least one similarity value is above a detection threshold.
